# EUROPEAN PATENT APPLICATION

(11) **EP 0 812 529 A2**
(43) Date of publication of application: **17.12.1997**
(21) Application number: 97304090.0
(22) Date of filing: 11.06.1997
(51) Int. Cl.: A01D 11/00, A01B 1/16

(54) **Digging apparatus**

(30) Priority: 13.06.1996 GB 9612392
(71) Applicant: Flannagan, Michael, Worsley, Manchester M28 6HT (GB); Baxendale, Rhonda Terrel, Worsley, Manchester M28 6HT (GB)
(72) Inventor: Flannagan, Michael, Worsley, Manchester M28 6HT (GB)
(74) Representative: Sherrard-Smith, Hugh

(57) **Abstract**

Digging blades 15 and 16 are slidably mounted on guides 14. A user brings the digging apparatus into alignment with the portion to be dug by carrying the device with the handle 12. First one blade 15 and then the other blade 16 is pushed down into the ground by treading on steps 19 and 20 with the blades each sliding on the guides 14.

The plant or soil is then lifted by pulling the handle 12 and the plant or soil is released by pulling the blades 15 and 16 up on their guides by using separate handles 24.

## Description

The present invention relates to digging apparatus and to a method of using digging apparatus. The invention is particularly, although not exclusively, applicable to the raising of plants or bulbs for transplanting or the raising of weeds.

According to one aspect of the present invention digging apparatus comprises a holding means and at least two blades, the blades having upper opposing regions spaced from each other by a first distance and lower opposing regions spaced from each other by a second distance in which the second distance is less than the first distance when the blades are located in the earth.

The holding means may comprise a handle. Alternatively, the holding means may be arranged to be attached to a mechanical digger.

With such an apparatus, earth or a plant or a weed that is engaged between the blades can be raised with the lesser spacing at the lower region of the blades serving to assist in the raising of the plant and the earth surrounding the plant.

The blades may be movable relative to each other such as by relative pivotal or sliding or linear movement or any combination thereof.

When the blades have penetrated the earth, the blades may converge towards each other in the downwards direction.

Guide means may be included that are arranged to control the movement of at least one of the blades. The blade may be arranged to slide on the guide means. The guide means may taper in a downwards direction such that a blade moving downwards on the guide means will move downwards and towards the other blade.

Movement of a blade on the guide means from an upper to a lower position may be arranged to cause at least a part, and preferably the whole of the moving blade to move in a direction towards the other blade. At least part of the moving blade may be arranged to be located, after having moved downwardly, closely adjacent to the other blade and may be arranged to contact the other blade. The closely adjacent or the contacting parts of the blade may be arranged to define a substantially complete enclosure and that enclosure may be arranged to be at an upper region of the blades.

A pair of guide means may be provided, one for each blade and the guide means may be spaced from each other but connected to each other, if desired by a pivotal connection or a pivotal link, in the region of the blades.

The guide means may be movable from a first position to a second position. In the second position the guide means may extend downwardly and towards each other to a greater extent than in the first position. In the first position the guide means may be substantially vertical and parallel and in the second position the guide means may be downwardly convergent.

At least one of the blades may be non linear in at least one cross-section. In that cross-section the blade or blades may include outer regions located nearer to the opposed blade than an intermediate region. That cross-section may be curved or arcuate.

At least one of the blades may be connected to a footrest which is arranged, in use, to be engaged by a user's foot to push the blade down into the ground. The footrest and the blade may be arranged to move as a unit. Alternatively the footrest may be indirectly connected to the blade, for instance by a link that is pivotally connected to parts that are constrained to move with the footrest and the blade. The footrest may be arranged to move in one direction when moving downwards to cause a blade to penetrate into the earth with the blade being arranged to move in a second, different direction and said one direction may be substantially vertically downwards.

At least one of the blades may be connected to actuating means such as hydraulic actuating means which may be arranged, in use, to push the blade down into the ground or to cause pivotal movement of the blade or both. The hydraulic means may be a piston. The piston may be directly connected to the blade. The piston may be indirectly connected to the blade.

At least one of the blades may be connected to actuating means such as hydraulic actuating means which are arranged, in use, to raise a blade with which it is associated from a lower position to an upper position.

The guide means may be arranged to direct a blade in a downwards direction which direction is the same as the upwards extent of the surfaces of the blade. Thus the blade is always guided in the extent of its blade and never has to push sidewards against the soil when slicing cleanly through the soil.

The digging apparatus may include a grip that is arranged to be pulled to raise a blade with which it is associated from a lower position to an upper position.

The holding means may be arranged to allow movement of the apparatus to the required location, steadying of the apparatus when one or both blades penetrate the earth, twisting of the apparatus when the blades have penetrated the earth or raising of the apparatus after the blades have penetrated the earth or any combination thereof.

At least one of the blades may be connected to actuating means which are arranged, in use, to change the angle of the blade in the vertical plane from a first angle to a second angle. The angle of the blade in the vertical plane may be increased or may be decreased.

According to a further aspect of the present invention a method of using digging apparatus comprises locating a first and second blades of the apparatus into the ground such that there is a larger distance between opposing portions of the blades at an upper region than there is at a lower region, the method then comprising raising the apparatus and soil located between the blades.

The method may comprise locating a first blade into the ground and then locating the second blade into the ground.

The method may comprise pushing one of the blades down into the ground by using foot pressure. The method may comprise moving one of the blades down into the ground by using hydraulic means.

The method may comprise substantially enclosing a region of soil located between an upper region of the blades.

The method may comprise moving one of the blades down in a first direction with the blade entering into the soil in a second, different direction. The first direction may be substantially vertical.

The method may comprise subsequently raising one of the blades in order to release soil or a plant located between the blades and the method may comprise raising that blade by pulling the blade upwardly.

The present invention also comprises a method of using a digging apparatus when the digging apparatus is as herein referred to.

The present invention includes any combination of the herein referred to features or limitations.

The present invention may be carried into practice in various ways but three embodiments will now be described, by way of example, and with reference to the accompanying drawings, in which:
Figure 1 is a side view of a digger with two blades in a raised position;
Figure 2 is a side view of the digger shown in Figure 1 with the blades in a lowered position;
Figures 3 to 7 are sequential views showing the engagement, raising and depositing of a plant when using the digger.

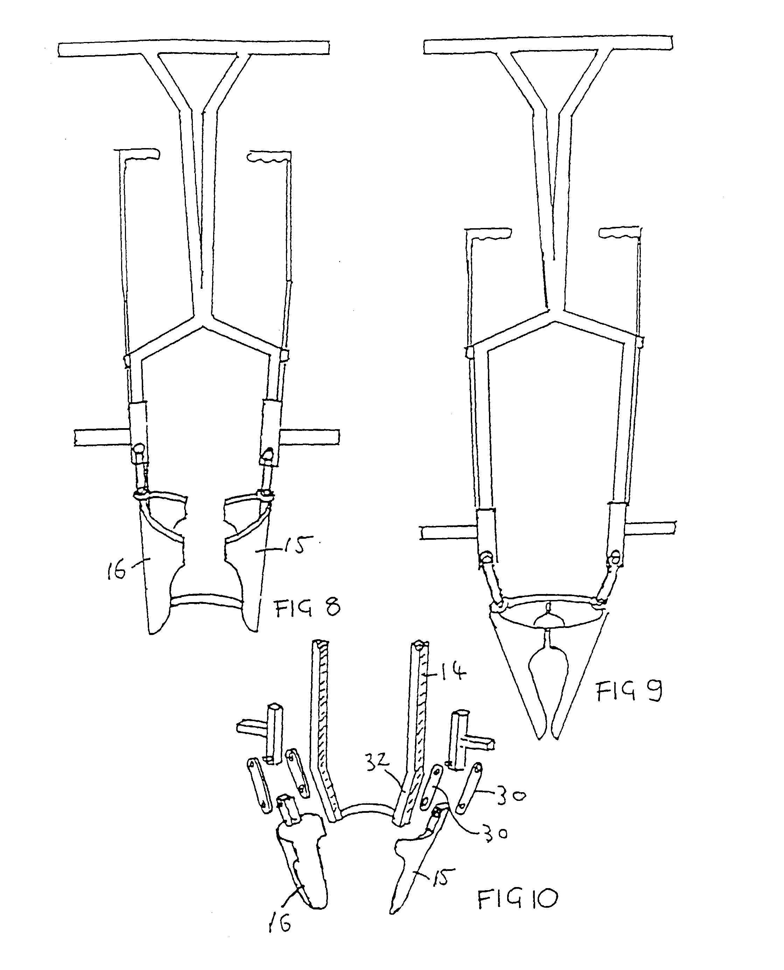

Figure 8 is a side view of a further embodiment of a digger with the blades in a raised position;
Figure 9 is a view similar to Figure 8 with the blades in a lowered position;
Figure 10 is a view showing the lower parts of the digger in Figures 8 and 9 in an exploded position;
Figure 11 is an exploded view of one of the blades of the digger shown in Figures 8 and 9;
Figure 12 is a back view of one of the blades;
Figure 13 is a perspective view slightly to one side showing the movement of the blades;
Figures 14 to 19 are sequential views showing the engagement, raising and depositing of a plant when using the digger;
Figures 20 and 21 are a side view of a third embodiment of a digger with, in Figure 20, the blades being in the lowered position and, in Figure 21, one of the blades being in a raised position;
Figures 22 and 23 are a side view of a fourth embodiment of a digger with, in Figure 22, the blades being in a lowered position and, in Figure 23, the blades being in a raised position;
Figure 24 is a side view showing one of the outer tube sections;
Figure 25 is an exploded view showing the lower parts of the digger in Figures 22 and 23;
Figures 26 to 30 are sequential views showing the engagement, raising and depositing of a plant when using the digger in Figures 22 and 23;
Figure 31 is a side view of a fifth embodiment of a digger showing the hydraulic means arranged to operate the digger;
Figure 32 is a side view of the digger shown in Figure 31 with the blades in an upper position;
Figure 33 is a side view of the digger shown in Figure 31 with the guides vertical and the blades in a lower and inwardly convergent position;
Figure 34 is a side view of the digger shown in Figure 31 with the blades in a lower position;
Figure 35 is a side view of the digger shown in Figure 31 with the guides vertical and the blades in raised position;
Figure 36 is a side view of the digger shown in Figure 31 with one of the blades in a lowered position;
Figure 37 is a perspective view of the digger shown in Figure 31 attached to the rear arms of a tractor.

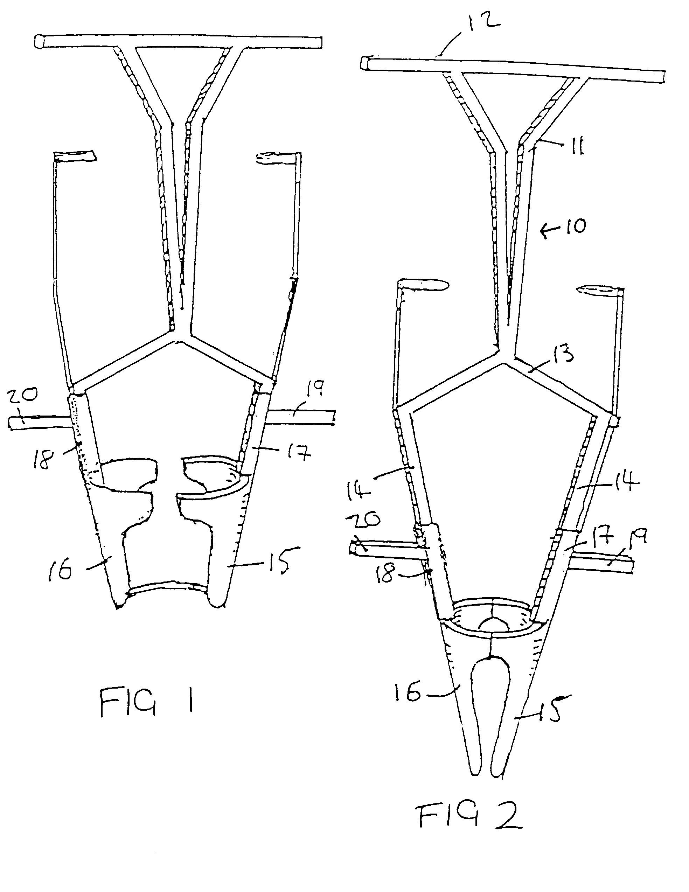

As shown in Figures 1 and 2, the digger comprises of a square tube frame 10 having a pair of parallel struts 11 extending upwardly that diverge away from each other at the upper end where they meet a cross member that comprises a handle 12. The handle 12 extends beyond each side where it engages the struts 11. At the lower end of the struts outwardly and downwardly diverging lengths 13 extend away from each other at a sharp angle to the vertical and then, at the remote end of those lengths 13 guides 14 extend downwardly and towards each other at a lesser angle to the vertical.

Mounted on each guide 14 are respective blades 15 and 16 with an outer tube section 17 and 18 of each blade surrounding their associated guide 14. Steps 19 and 20 extend outwardly from each tube section 17 and 18.

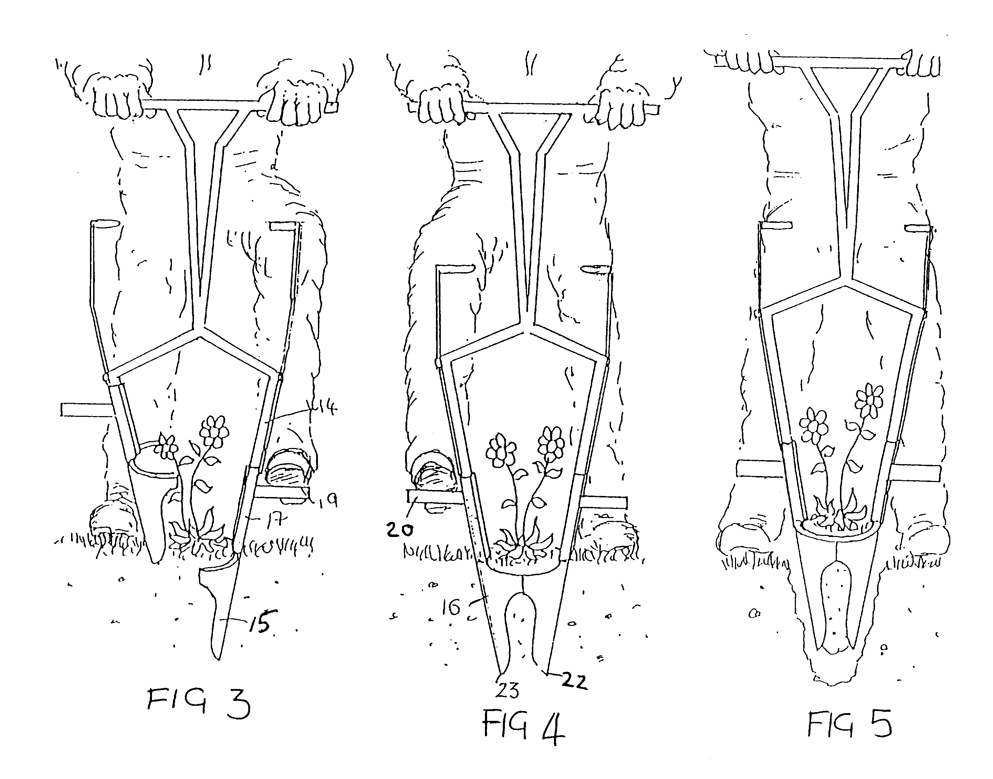

The sequential operation of the digger will now be described with reference to Figures 3 to 7 of the accompanying drawings. The digger approaches a plant 21 to be removed with both of the blades in the raised position shown in Figure 1 and with a person gripping the handle 12 at each end. With one foot on the ground the user then places the other foot on the step 19 and, with their weight, urges the blade 15 down into the ground into the position shown with the movement of that blade being guided by the engagement of the tube section 17 with the guide 14. With the blade 15 in the fully lowered position the foot is removed from the step 19 and the other foot is placed upon the step 20 with that foot then urging the blade 16 down into the ground into the position shown in Figure 4. Both feet are then removed from the steps and a person then pulls on the handle 12 to cause the plant to be raised, as shown in Figure 5 or pushes the digger to one side and before lifting the digger. As each of the blades provides an upwardly and outwardly tapering surface, any tendency of the plant to move down is resisted by the soil being wedged between the blades. Furthermore, as the blades move towards each other on insertion a slight gripping force is exerted on the soil between the blades.

The blades include a relatively sharp tip 22 and 23 to assist in the blade penetrating the soil and, in the lower position, the blades do not meet at their peripheral part circular extent for ease of insertion of the blades. At the upper ends of the blades though, when they are in the lowered position, a continuous circular periphery is provided in order to prevent soil adjacent to the surface from falling off.

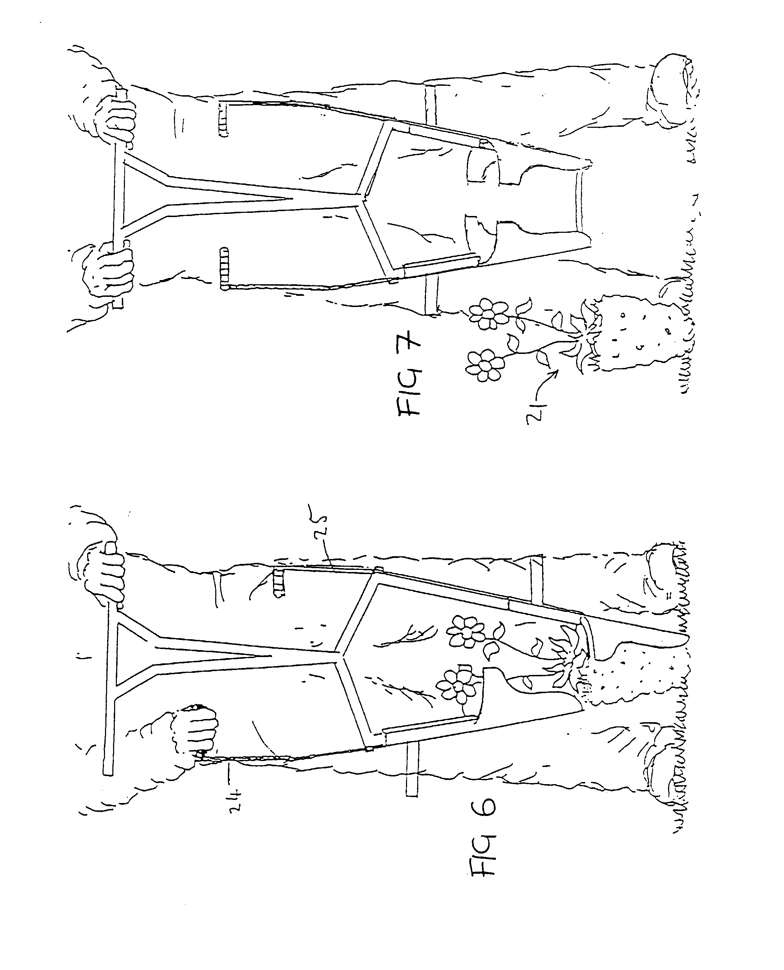

The plant is then removed to the location where it is required to be deposited and the blade 16 is raised by pulling an extension handle 24 that is connected to the tube section 18. This causes the tube section 18 to slide up on its associated guide 14 into the raised position shown in Figure 6. The digger can then be lifted away from the plant. Alternatively an extension handle 25 associated with the other tube section 17 can also be raised before removing the digger.

If desired the plant could be located into a recess in the soil when the digger is in the position shown in Figure 5 with the blades then being lifted to deposit the plant in a suitably located hole without the plant ever having to be disengaged from the digger. If desired, the hole in the ground into which the plant is placed can be created by using the digger to remove the soil before a plant is engaged from another location and then moved to the recently created hole. When relocating a plant in this way the blades always engage and grip the soil from start to finish and so disturbance of the soil surrounding the roots adjacent to the plant is kept to a minimum.

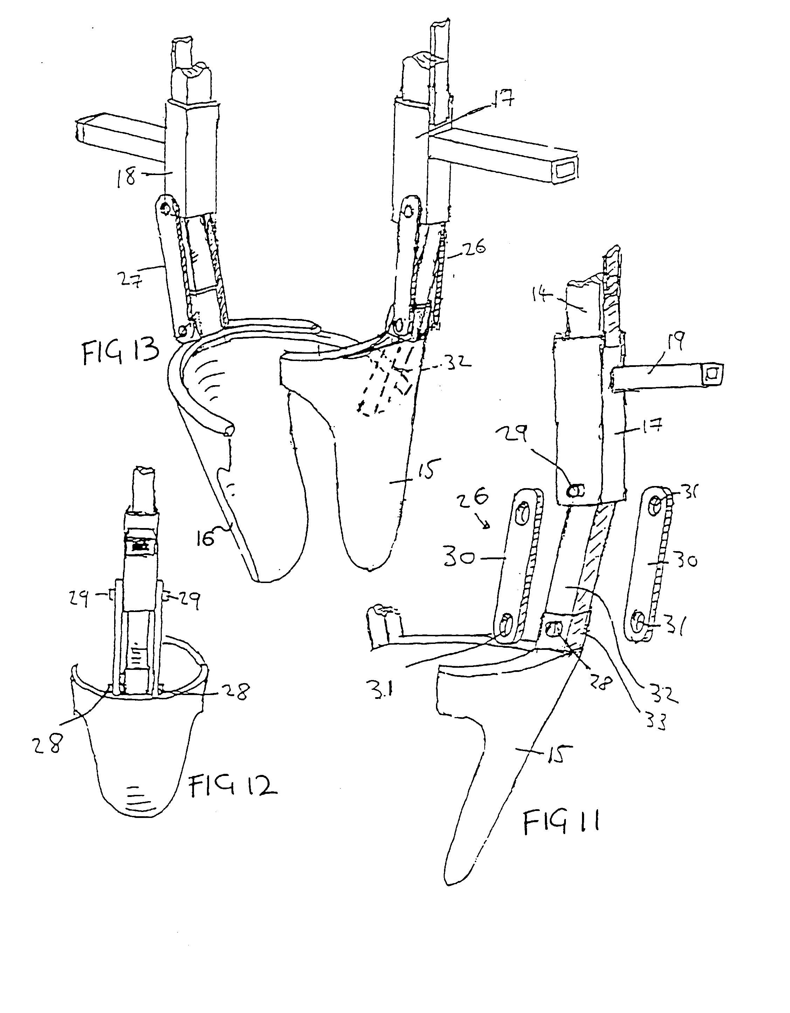

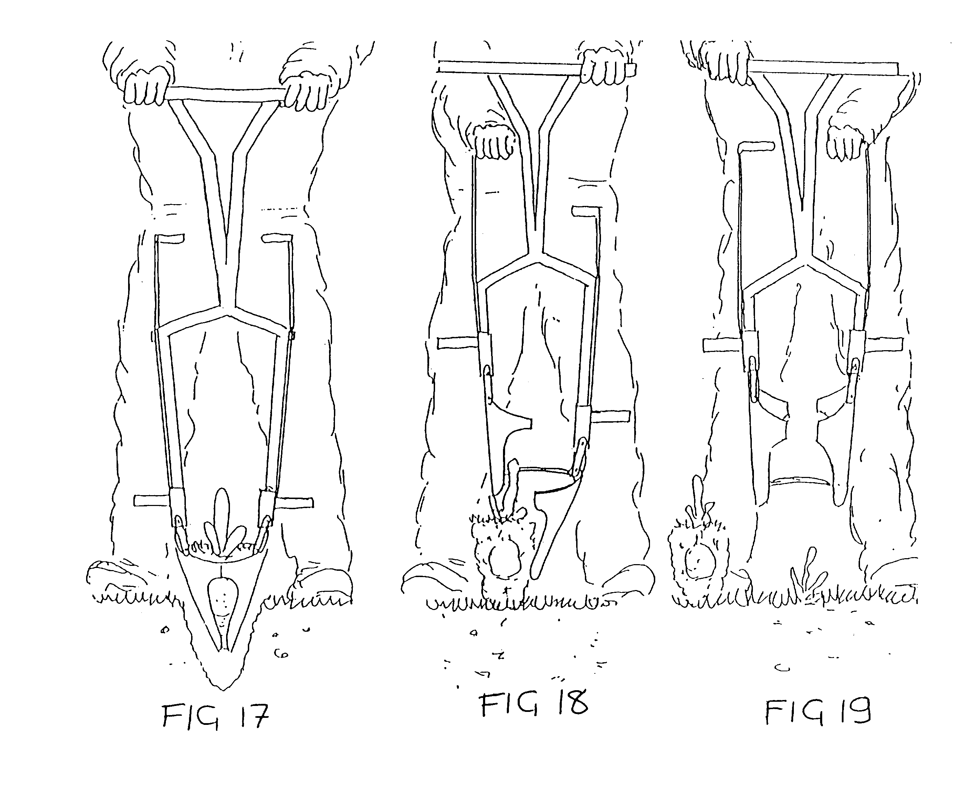

In the embodiments shown in Figures 11 to 19, the blades 15 and 16 are connected to their associated tube sections 17 and 18 via linkages 26 and 27. These linkages are identical and so only the linkage 26 will be described with reference to Figures 11 to 13.

In this embodiment the blade 15 is not directly connected to the tube section 17. Instead, the blade is provided with outwardly extending lugs 28 and the lower end of the tube section 17 is also provided with corresponding lugs 29. A pair of plates 30 having openings 31 at either end have those openings 31 located over the lugs 28 and 29. It is the plates 30 that connect the blade 15 to the tube section 17. The lower end of the guide 14 includes a downwardly and inwardly extending section 32 at its lower end and the blade 15 has a surrounding collar 33 that is able to slide on this extension 32. If desired, the extension 32 can be a slightly curved section. When the step 19 is urged downwardly the blade 15, which may initially move downwardly in the same direction as the tube section 17 (which is constrained to slide on the main guide 14) subsequently or then moves at an angle to the downwards movement of the tube section 17 as it is constrained to follow the extension 32. This angled movement is allowed for by the connection of the plates 30 between the tube section 17 and the blade 15.

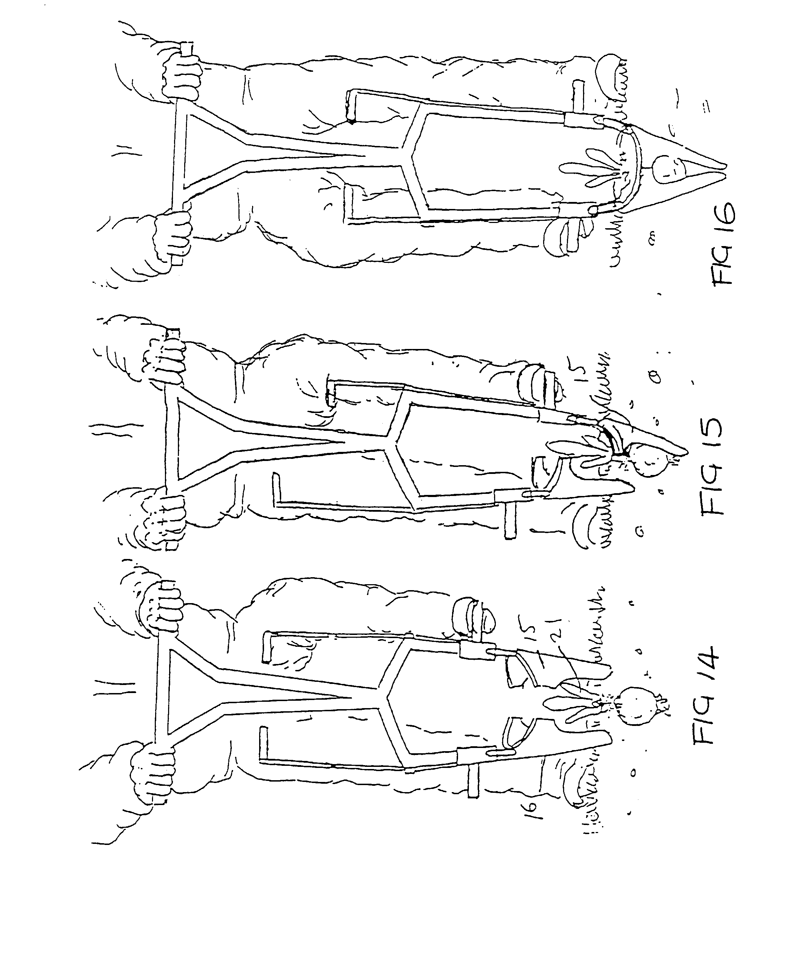

The sequence of the engagement of a plant 21 (or in this case a plant emanating from a bulb) is shown in Figures 14 to 19. In Figure 14 it can be seen that both blades 15 and 16 extend in a generally vertical direction. However, when the blade 15 is being pushed down into the ground it can be seen that its angle to the vertical changes. This angle may change before soil penetration to ensure that the blade moves in a linear direction through the soil.

The operation of the digger shown in Figures 14 to 19 is then largely the same as the operation of the digger described in relation to the first embodiment in that the plant can be raised, relocated and then detached from the digger by raising the extension handle or handles.

In both the embodiments a reinforcing semi circular strut 34 extends between the lower ends of the guides 14 or the extensions 32 such that flexure of the opposing guides or extensions 32 towards or away from each other is resisted. In use the strut 34 will rest on the ground when the blades are in the raised position, and each blade will pass down within the arc defined by the strut 32 when being moved to the lowered position.

Although the figure has been described as being for use in raising and safeguarding a plant or bulb, it will be appreciated that the present invention is also applicable to the raising of weeds.

If desired, instead of raising the digger immediately when a plant is engaged the digger can be given a slight twist in order to assist in the removal of the soil engaged by the digger and possibly also for the sides of the blade that do not meet to cut through the soil and any roots that may be in that space. The twisting, if desired, may continue whilst raising the digger.

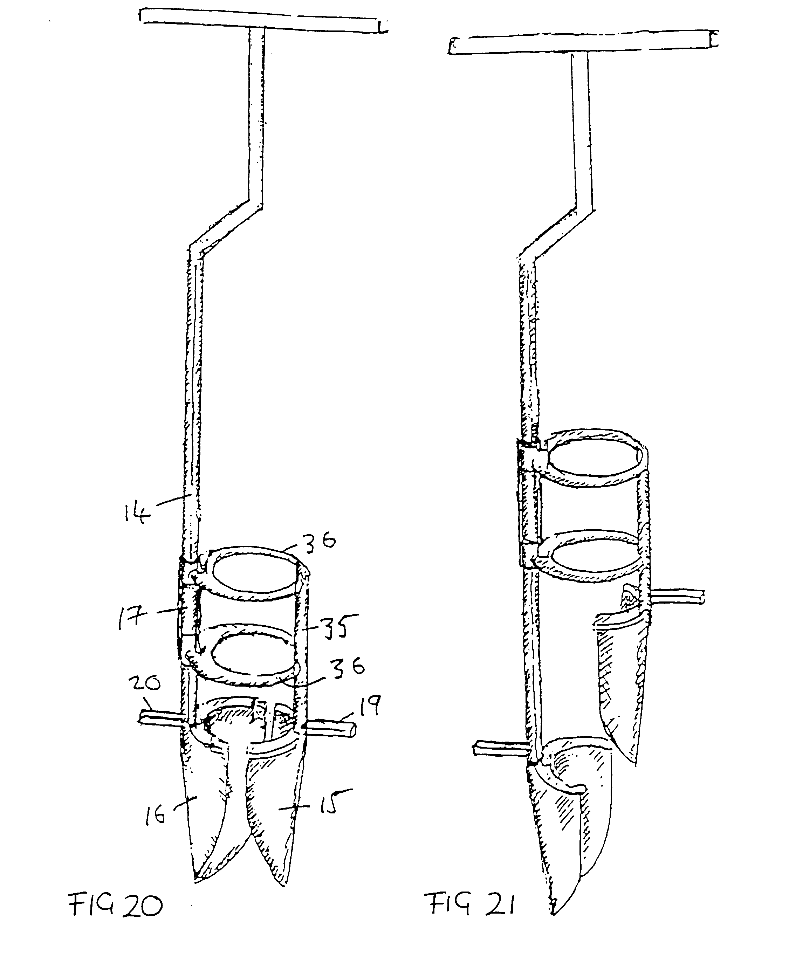

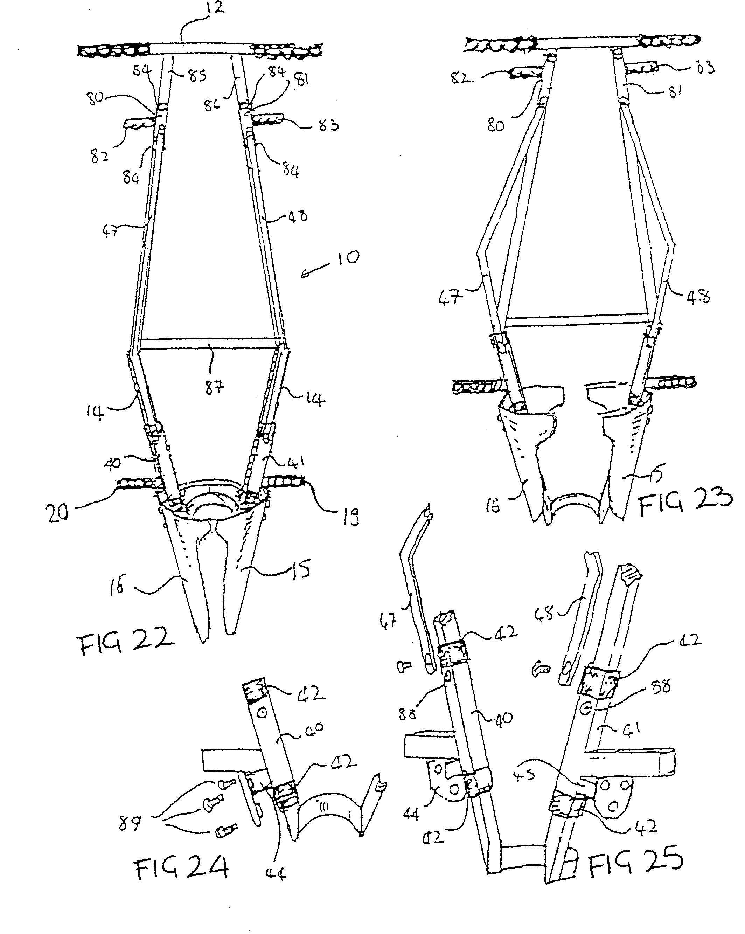

In the embodiment shown in Figures 20 and 22 the blade 15 is slidably mounted on the main guide 14 and the blade 16 is firmly connected to the lower end of that guide 14. The blades converge slightly towards each other in a downwards and inwards direction. In use, the step 20 is pushed down into the ground causing the handle also to move downwardly. Then the blade 15 is pushed down into the ground by pushing on the step 19 with the blade 15 sliding on the guide 14 by means of its tube section 17. That tube section 17 is connected to the blade 15 by an upwardly extending strut 35 and a pair of spaced circular connectors 36. A plant that has been raised by the digger can extend upwardly through the circular gap between each of the struts 36.

The digger is used in the same way to raise a plant and deposit it, as previously described in relation to the other embodiments. However, in order to raise the blade 15 a user grasps the uppermost strut 36 in order to pull the blade upwardly.

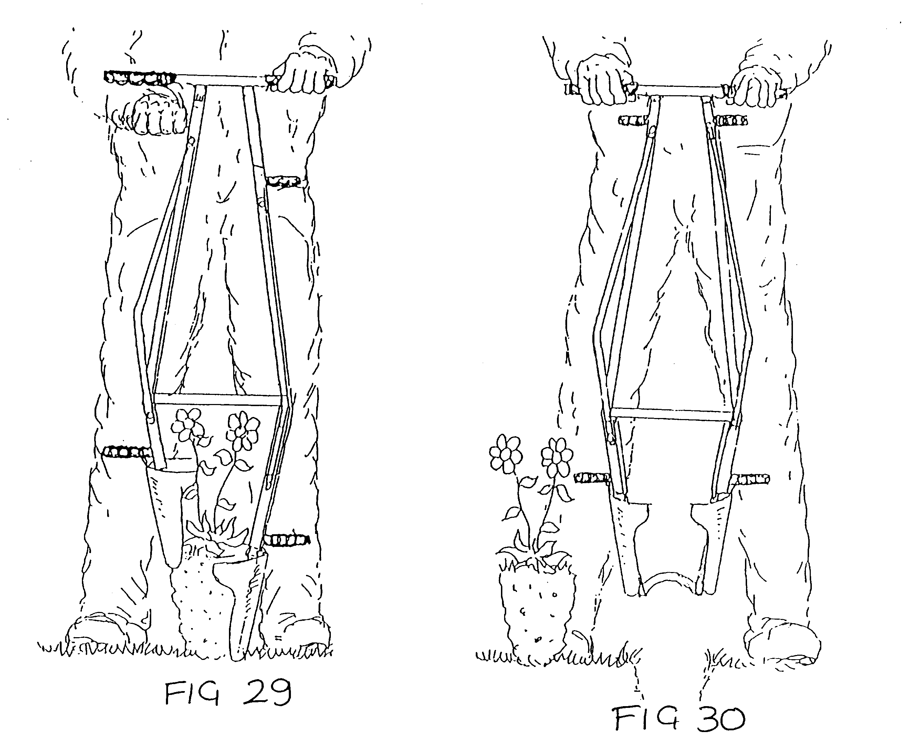

In the embodiment shown in Figures 22-30, the digger 10 has a handle 12 from which two divergent struts 85, 86 extend downwardly. The lower sections of the two struts 85, 86 have a horizontal cross bar support 87 secured therebetween. Additionally, the lower ends of the two struts 85, 86 have respective guides 14 secured thereto, which converge downwardly towards each other. Outer tube sections 40, 41 are arranged to surround the guides 14, and can be slidably moved along the guides 14. The outer tube sections 40,41 have upper and lower plastic bushes 42, as shown in Figure 25, which aid the sliding movement of the outer tube sections 40, 41 along the guides 14. Additionally, the outer tube sections 40, 41 have horizontal footrests 19, 20 extending outwardly in a direction away from each other. Directly below and adjacent to the footrests 19, 20 are outwardly extending flanges 44, 45 which are arranged to receive screws 89 which secures the blades 15, 16 to the outer tube sections 40, 41.

As shown in Figure 25, the outer tube sections 40, 41 have nuts 88 welded at an upper position. The nuts are arranged to receive screws to attach lifting supports 47, 48 to the respective outer tube sections 40, 41. The lifting supports 47, 48 are initially divergent and extend upwardly from the outer tube sections 40, 41. The lifting supports 47, 48 have upper sections which are arranged at an obtuse angle to the lower sections, whereby the two upper sections are convergent towards each other. As shown in Figure 22, when the blades 15, 16 are in a lower position the lifting support 47, 48 are in register with the respective guides 14 and struts 85, 86. The upper ends of the lifting supports 47, 48 are pivotally connected to outer tube sections 80, 81 respectively. The outer tube sections 80, 81 are arranged to surround the struts 85, 86 and can be slidably moved along the struts 85,86. The outer tube sections 80,81 have upper and lower plastic bushes 84 which aid the sliding movement. Additionally, the outer tube sections 80, 81 have horizontal handles 82, 83 extending outwardly away from each other.

Movement of the handles 82, 83 in an upwards direction from a lower position, shown in Figure 22, causes corresponding movement of the blades to an upper position, as shown in Figure 23.

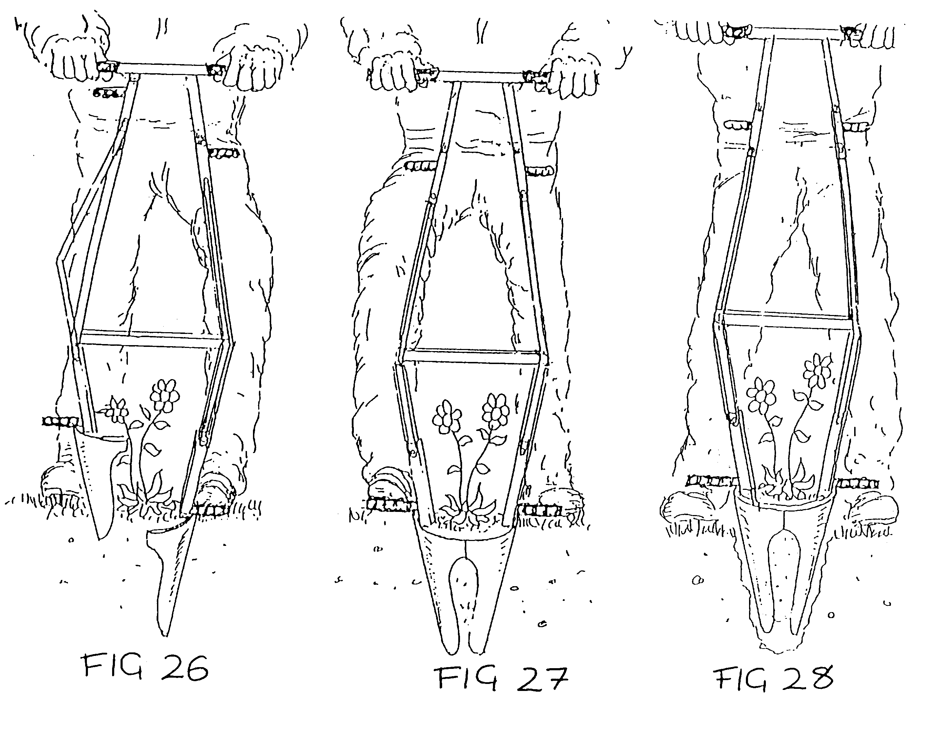

The sequence of engagement of a plant is shown in Figures 26-30. The operation of the digger is largely the same as the operation of the digger described in relation to the first embodiment in that the plant can be raised, relocated and then detached from the digger by raising the handles 82, 83.

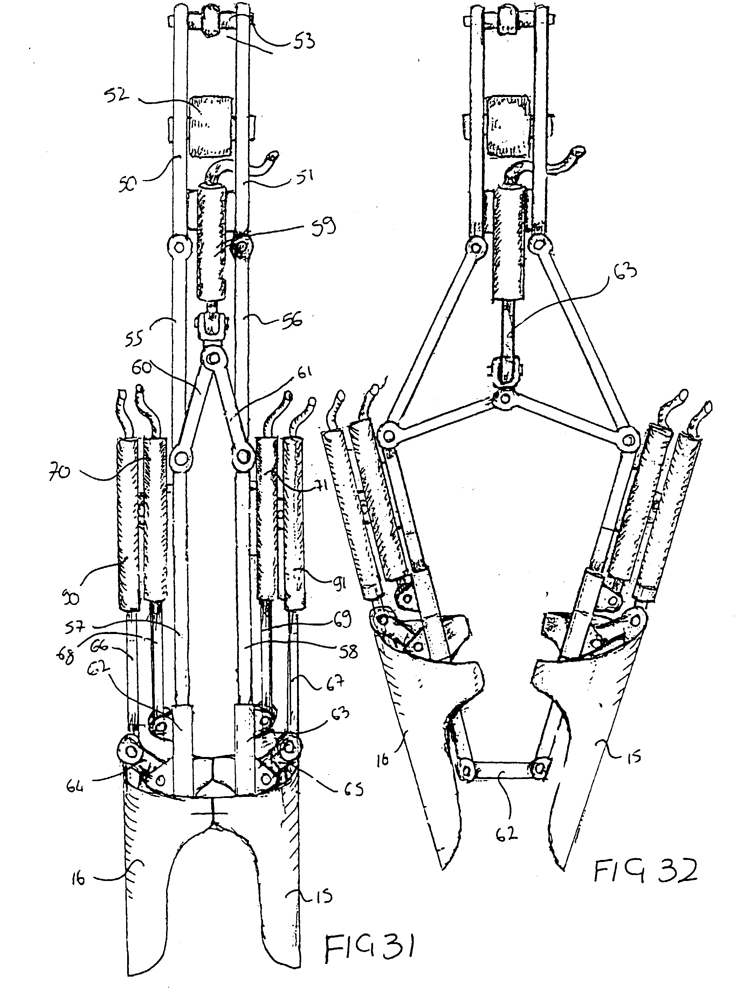

In the embodiments shown in Figures 31-37 the digger 10 is arranged to be attached to arms extending from the rear of a tractor 88, and to be operated by hydraulic means, as shown in Figure 37.

As shown in Figure 31, the head 52 of the tractor is attached between two parallel vertical supports 50, 51, the upper ends of which are connected by a ram 53 attached to an upper telescopic arm 92 of the tractor. The lower ends of the vertical supports 50, 51 are pivotally connected to two struts 55, 56 respectively. Similarly, the lower ends of the two struts 55, 56 are pivotally connected to two guides 57, 58.

A hydraulic cylinder housing 59 is mounted between the lower sections of the vertical supports 50, 51 and the lower end of the associated piston 63 is pivotally connected to two linking members 60, 61. The linking members 60, 61 diverge downwardly and attach concentrically with the pivotal join between the respective strut 55, 56 and guide 57, 58.

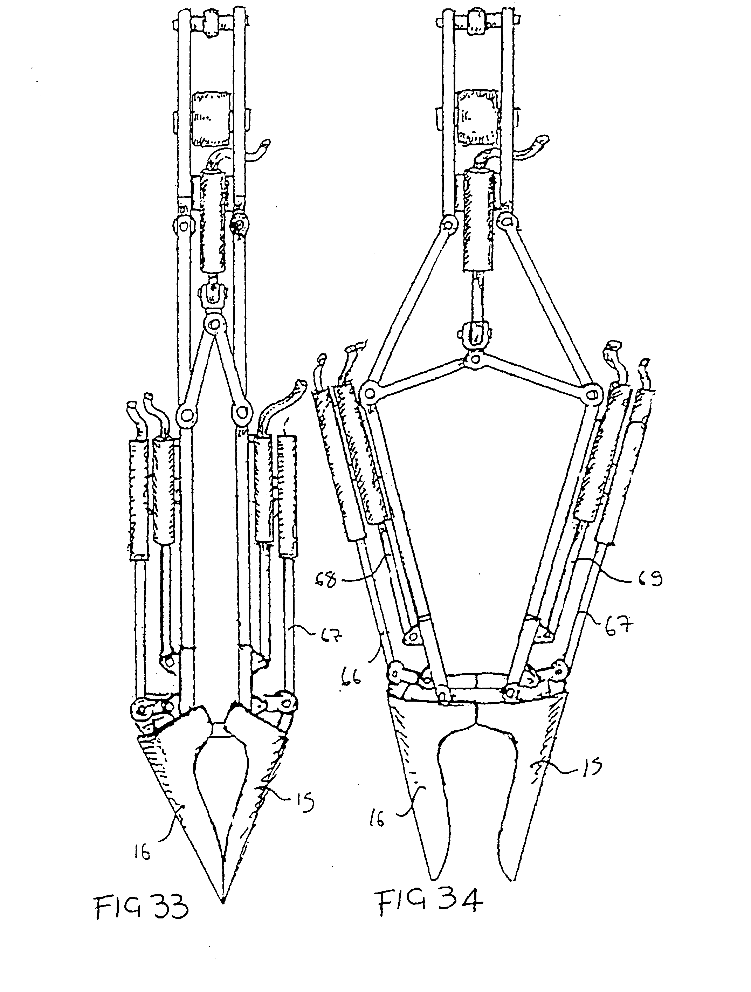

The lower ends of the guides 57, 58 are connected together by a horizontal linking member 62 as shown in Figure 32. The arrangement is such that extension of the piston 63 from the cylindrical housing 59 causes the two linking members 60, 61 to move the lower ends of the struts 55, 56 and the upper ends of the guides 57, 58 apart, as shown in Figure 34. This causes the guides 57, 58 to move from being parallel to be downwardly convergent towards each other.

Outer tube sections 62, 63 surround the respective guides 57, 58 and are arranged to slidably move along the guides 57, 58. Blades 15, 16 have flanges 64, 65 projecting inwardly from an upper region. The flanges 64, 65 are pivotally connected to the outer tube sections 62, 63. Additionally, the lower ends of pistons 66, 67 are pivotally connected to an upper extent of the blades 15, 16. The cylindrical housings 90, 91 of the pistons 66, 67 are secured to the guides 57, 58. The arrangement is such that extension of the pistons 66, 67 causes the blades 15, 16 to pivot about the outer tube sections 62, 63). For examples, extension of pistons 66, 67 in Figure 31, causes the blades 15, 16 to pivot about the outer tube sections 62, 63 to the position shown in Figure 33.

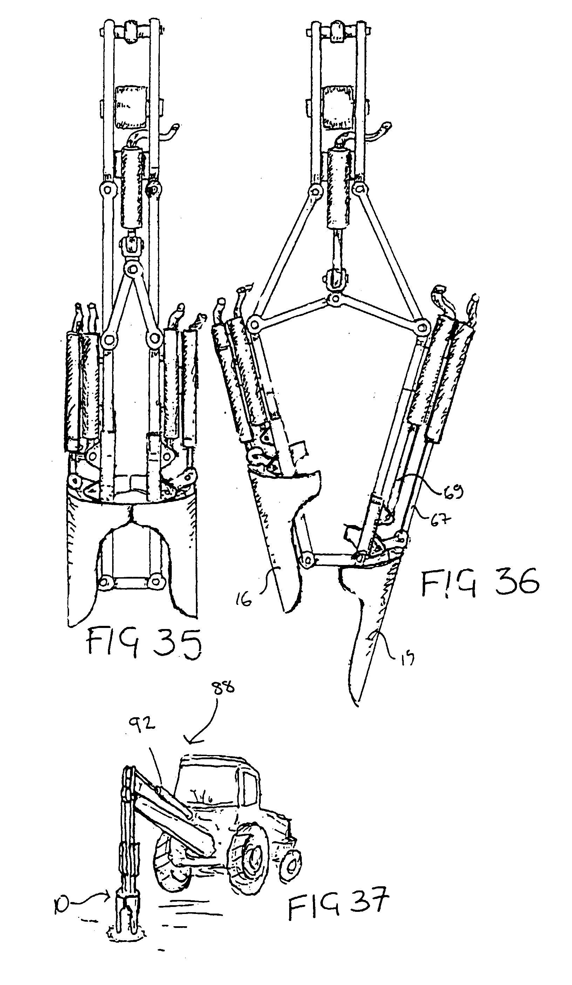

The upper ends of the outer tube sections 62, 63 are connected to pistons 68, 69, and the hydraulic cylindrical housings 70, 71 are mounted on the guides 57, 58. Extension and retraction of the pistons 68, 69 causes movement of the outer tube sections 62, 63 and hence movement of the blades 15, 16 along the guides 57, 58 between an extended position shown in Figure 31, and a retracted position as shown in Figure 35. Similarly if the upper piston 63 is extended and the guides 57, 58 are in a downwardly convergent position, as shown in Figure 32, then extension of piston 69 causes downward movement of the blade 15 shown in Figure 36. The extension of both pistons 68, 69 whilst the guides 57, 58 are in a downwardly convergent position results in the blades 15, 16 moving to the positions shown in Figure 34. In order to ensure a constant orientation of the blades 15, 16 whilst moving along the guides 57, 58, extension and retraction of the pistons 68, 69 is coordinated with corresponding movement of the pistons 66, 67.

The sequence of removing a plant using the digger 10 may have a starting position with all the pistons in a retracted position, as shown in Figure 35. The digger can be correctly orientated relative to the ground by adjusting the length of the arm 92 of the tractor. Similarly if the upper piston 63 is extended and the Lowering of the blades into the ground may be achieved by powering down of an arm of the tractor to which the digger is attached, in which case the sequence of operation described below will take place with both of the blades starting off underground. Extension of the upper piston 63 causes the guides 57, 58 to become downwardly convergent as shown in Figure 32. Then extension of piston 69 with corresponding extension of piston 67 causes movement of the blade 15 to the position shown in Figure 36. It should be realised that, in use, the blade 15 would be underground. Subsequently, extension of piston 68 with corresponding extension of piston 66 causes the blades 15, 16 to be in the position shown in Figure 34, albeit, in use, the blades 15, 16 would be located underground located beneath the plant. Therefore, the upwardly and inwardly orientated blades 15, 16 would provide support to raise a plant out of the ground. However, additional support may be provided by the retraction of the upper piston 63 and the further extension of pistons 66, 67 to cause the blades 15, 16 to pivot inwardly towards each other, as shown in Figure 33. This arrangement would thereby provide greater support and may also sever any roots which may be restricting the excavation of the plant. In this position the digger 10 may be raising an arm of the tractor 88 which is attached to the digger 88, and relocated to the position where the plant is to be deposited. The subsequent release of the plant may be caused by the retraction of pistons 66, 67 to the position shown in Figure 31.

It is realised that the sequence of operation of the digger may be dependent on the application for which it is being used, and the sequence of operation stated above in only one such example.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. Digging apparatus comprising holding means (12) and at least two blades (15,16), the blades having upper opposing regions spaced from each other by a first distance and lower opposing regions spaced from each other by a second distance in which the second distance is less than the first distance when the blades are located in the earth.

2. Apparatus as claimed in any preceding claim in which the blades (15,16) are movable relative to each other.

3. Apparatus as claimed in any preceding claim including guide means (14, 58, 57) arranged to control the movement of at least one of the blades such that a blade moving downwards on the guide means will move downwards and towards the other blade.

4. Apparatus as claimed in Claim 3 in which at least the part of the blade (15, 16) that is moved is arranged to be located, after having moved downwardly, closely adjacent to the other blade.

5. Apparatus as claimed in Claims 8 to 21 in which guide means (57, 58) that are arranged to control the movement of at least one of the blades are movable from a first position to a second position in which, in the second position, the guide means extend downwardly and towards each other to a greater extent, if any, that they extend downwardly and towards each other in the first position.

6. Apparatus as claimed in any preceding claim in which at least one of the blades is connected to a footrest (19, 20) which is arranged, in use, to be engaged by a user's foot to push the blade down into the ground.

7. Apparatus as claimed in Claim 6 in which the footrest (19, 20) is arranged to move in one direction when moving downwards to cause a blade to penetrate into the earth with the blade being arranged to move in a second, different direction.

8. Apparatus as claimed in any preceding claim in which at least one of the blades is connected to actuating means (90, 91).

9. Apparatus as claimed in Claim 8 in which at least one of the blades is connected to actuating means (57, 69) which are arranged, in use, to raise a blade with which it is associated from a lower position to an upper position.

10. A method of using digging apparatus comprising locating first and second blades (15, 16) of the apparatus into the ground such that there is a larger distance between opposing portions of the blades at an upper region than there is at a lower region, the method then comprising raising the apparatus and the soil located between the blades.

11. A method as claimed in Claim 10 comprising locating a first blade (15) into the ground and then locating the second blade (16) into the ground.

12. A method as claimed in either of Claims 10 or 11 comprising moving one of the blades down in a first direction with the blade entering the soil in a second, different direction.

13. A method as claimed in any of Claims 10 to 12 comprising subsequently raising one of the blades in order to release soil or a plant located between the blades.
